# DEMANDE DE BREVET EUROPEEN

(11) **EP 2 073 450 A1**
(43) Date de publication de la demande: **24.06.2009**
(21) Numéro de dépôt: 08172148.2
(22) Date de dépôt: 18.12.2008
(51) Int. Cl.: H04L 12/28, H04L 29/08

(54) **Procédé de communication entre un terminal et un réseau de communication**

(30) Priorité: 19.12.2007 FR 0760028
(71) Demandeur: FRANCE TELECOM, 75015 Paris (FR)
(72) Inventeur: Bertin, Laurence, 35690 Acigne (FR); PAROUX, Vincent, 35520, LA MEZIERE (FR); Freyermuth, David, 35510 Cesson Sevigne (FR)
(74) Mandataire: Thiollier, Clémence-Olivia Laure Marie

(57) **Abrégé**

L'invention concerne un procédé de communication entre un terminal (10) et un réseau de communication, dans lequel le terminal peut accéder au réseau selon au moins un type d'accès (14, 16), par l'intermédiaire d'un dispositif intermédiaire (26, 34), et le procédé comprend une étape d'insertion d'une information (CGI₂₂, CGI₃₄) par le dispositif (26, 34), dans une communication entre le terminal et le réseau, et une étape de détermination, à partir de cette information, du type d'accès utilisé par le terminal.

## Description

La présente invention concerne le domaine de la communication entre un terminal et un réseau. Plus précisément, mais non exclusivement, l'invention s'intéresse au cas où le terminal peut accéder au réseau selon au moins deux types d'accès.

On connaît déjà un terminal de communication pouvant accéder à un même réseau de communication, par réseau utilisant le protocole GSM (Global System for Mobile), selon deux différents types d'accès.

Le premier type d'accès est un accès utilisant un premier types d'ondes, des ondes radio, par exemple un accès de type GERAN (GSM Edge Radio Access Network). Selon ce type d'accès, le terminal communique tout d'abord à l'aide d'ondes radio avec un dispositif intermédiaire, appelé BSC (Base Station Controller), qui transmet ensuite la communication au réseau coeurGSM à travers une interface.

Le second type d'accès est un accès utilisant un autre types d'ondes, par exemple un accès Wifi, de type UMA (pour Unlicensed Mobile Access). Selon ce type d'accès, le terminal se connecte à un point d'accès de type WLAN (Wireless Local Arae Network) et communique tout d'abord, grâce à un tunnel UMA avec un dispositif intermédiaire appelé HBSC (Home Base Station Controller). Puis, le HBSC, jouant le rôle de BSC dans un type d'accès plus traditionnel de type GERAN, est connecté au réseau coeur GSM via l'interface présentée ci-dessus, et transmet l'information à celui-ci.

Ainsi, une fois que la communication est transmise au réseau coeur GSM, une même interface est utilisée, que l'on ait utilisé un accès GERAN ou un accès UMA pour accéder au réseau, si bien que cette interface ne présente aucune spécificité liée au type d'accès emprunté.

Les inventeurs ont constaté qu'un message issu de l'interface définie ci-dessus ne permet pas de déduire le type d'accès utilisé par un terminal de communication.

La présente invention offre une solution ne présentant pas ce problème.

A cet effet, l'invention a pour objet un procédé de communication entre un terminal et un réseau de communication, le terminal étant apte à accéder au réseau selon au moins un type d'accès, par l'intermédiaire d'un dispositif intermédiaire, le procédé comprenant une étape d'insertion d'une information, par le dispositif, dans une communication entre le terminal et le réseau, et une étape de détermination, à partir de cette information, du type d'accès utilisé par le terminal.

Ainsi, les inventeurs à l'origine de la présente invention ont eu l'idée d'utiliser une information dans la communication entre le terminal et le réseau pour déterminer le type d'accès utilisé par le terminal pour accéder au réseau.

En mettant à disposition, auprès de fournisseurs de services, une information sur le type d'accès utilisé, ceux-ci peuvent par la suite proposer au terminal des services spécifiques au type d'accès emprunté. En effet, on peut dès lors adapter les services fournis à l'utilisateur en fonction du type d'accès utilisé. Par exemple, selon le type d'accès utilisé, le débit de communication est différent, et le fournisseur de services peut adapter les échanges avec le terminal à ce débit de communication. Ainsi, dans le cas d'un accès utilisant des ondes radio, de type GERAN (débit théorique GPRS de 380 Kbit/s), le débit de communication est plus faible que dans le cas d'un accès WIFI, de type UMA (débit de l'ordre de 20 Mbit/s), si bien que le fournisseur de services peut par exemple décider de mettre en oeuvre des échanges épurés lorsque le terminal utilise l'accès GERAN, et des échanges plus riches lorsque le terminal utilise l'accès UMA. Selon un autre exemple d'application, le fournisseur de services peut déclencher des services en fonction du type d'accès utilisé, notamment déclencher le téléchargement de podcast ou l'envoi d'informations au moment où l'utilisateur utilise l'accès UMA, en rentrant chez lui. Ainsi, grâce au procédé de communication décrit ci-dessus, le fournisseur de services n'est plus obligé de rendre un service standard et identique à l'utilisateur : le service est désormais adaptable au type d'accès utilisé, tout en pouvant utiliser une interface standardisée.

La détermination du type d'accès utilisé par le terminal est d'autant plus intéressante que, de plus en plus, les terminaux ont la possibilité de changer facilement d'accès lors de communications avec le réseau. Par exemple, un téléphone portable peut changer automatiquement d'accès lorsque son utilisateur est au voisinage d'une borne WIFI.

On notera que, grâce à l'insertion de l'information dans la communication, on dispose d'une information disponible en temps réel sur le réseau de communication. En conséquence, à tout moment, le fournisseur de services peut avoir accès à l'information, du fait qu'elle est véhiculée avec la communication, sans qu'il ait besoin d'effectuer d'une requête particulière pour obtenir cette information. Ainsi, le procédé ne met pas en oeuvre des requêtes particulières visant à déterminer le type d'accès, requêtes qui, d'une part, nécessiteraient un temps d'attente avant d'être exécutées, et d'autre part, surchargeraient le réseau.

On notera aussi que, dans ce qui précède, on désigne par "réseau de communication" un réseau principal de communication, ou "réseau coeur", que l'on peut définir comme un réseau dans lequel l'ensemble des communications utilise un protocole commun, par exemple le protocole GSM. Dans la suite, on appellera ce réseau "réseau principal". Ainsi, dans le cas du réseau GSM, le procédé décrit ci-dessus permet à un terminal, par exemple un téléphone mobile, de communiquer avec le "réseau principal GSM", appelé aussi "réseau coeur GSM", la communication au sein de ce réseau coeur ayant lieu grâce à une interface A nécessaire à l'utilisation du protocole GSM. La communication entre le terminal et le réseau principal peut avoir lieu par l'intermédiaire d'un réseau d'accès, ce réseau d'accès étant différent selon le type d'accès utilisé par le terminal. Ainsi, dans le cas d'un accès GERAN, le réseau d'accès est un réseau GERAN. Dans le cas d'un accès UMA, le réseau d'accès comprend un réseau WIFI et un réseau ADSL, l'accès au réseau principal GSM se faisant tout d'abord par une communication entre le terminal et le réseau WIFI, puis entre le réseau WIFI et le réseau ADSL. Généralement, le dispositif de communication présenté ci-dessus, mettant en oeuvre l'insertion de l'information dans la communication, est un dispositif intermédiaire entre le réseau d'accès et le réseau principal, et est éventuellement chargé de configurer la communication issue du réseau d'accès afin de permettre la communication avec le réseau principal, par exemple en attribuant l'interface A. Dans le cas d'un accès GERAN, le dispositif intermédiaire est un BSC. Dans le cas d'un accès de type UMA, le dispositif intermédiaire est un HBSC.

Avantageusement, l'insertion de l'information comprend une attribution d'une valeur dans un champ véhiculé par le protocole du réseau principal.

Avantageusement, le procédé comprend en outre une étape de sélection d'un contenu à envoyer au terminal en fonction du type d'accès déterminé.

On peut donc utiliser la détermination du type d'accès pour ensuite adapter les échanges que l'on souhaite mettre en oeuvre entre le réseau principal et le terminal, en particulier les échanges entre un serveur appartenant à un fournisseur de services et le terminal. Avantageusement, la sélection est effectuée, directement ou indirectement, en fonction du débit du type d'accès déterminé. En particulier, on sélectionne un contenu de petite taille si le débit est faible, par exemple dans le cas d'un accès GERAN, et un contenu de taille plus élevée si le débit est plus élevé, par exemple dans le cas d'un accès UMA. On entend également par "sélection d'un contenu envoyé au terminal en fonction du type d'accès déterminé" le fait de tenir compte du type d'accès pour déclencher l'envoi du contenu au terminal. Par exemple, on peut mettre en oeuvre l'étape d'envoi à la condition que le type d'accès soit un type d'accès prédéterminé. Ainsi, on peut envoyer un contenu uniquement à partir du moment où le terminal utilise un accès à haut débit, par exemple en déclenchant le téléchargement d'un contenu lorsque l'utilisateur utilise l'accès UMA.

Avantageusement, l'information est insérée dans un champ prédéterminé véhiculé par un protocole utilisé pour la communication, ce champ étant apte à être utilisé pour une fonction autre que la détermination du type d'accès.

Ainsi, plutôt que de créer un champ spécifique au type d'accès dans le protocole du réseau principal, on utilise un champ déjà employé pour une autre fonction, dans la communication en cours ou dans d'autres communications, à savoir par exemple la localisation géographique du terminal, si bien que l'invention est facile à mettre en oeuvre. L'utilisation de ce champ est particulièrement intéressante dans le cas notamment d'un réseau principal utilisant le protocole GSM, comme cela va être expliqué dans la suite. Parmi les champs de l'interface A utilisée dans le protocole GSM, un champ est réservé à des informations de localisation géographique du terminal. Ce champ est appelé CGI (Cell Global Identity). Généralement, dans le cas où le terminal accède au réseau GSM par un accès GERAN, le CGI est attribué par le BSC, et correspond à la localisation géographique d'une station appelée BTS (Base Transceiver Station), sur laquelle est raccordé, par ondes radio, le terminal. Ainsi on peut par la suite, au cours de la communication dans le réseau principal, extraire le CGI pour localiser le terminal et lui fournir des services à partir de cette localisation, par exemple l'envoi d'une carte géographique. Dans le cas d'un accès UMA, il n'existe pas de station BTS à laquelle le terminal est raccordé, du fait que le terminal est généralement raccordé à une passerelle de communication, telle que celle commercialisée sous la marque LiveBox, laquelle est ensuite raccordée au dispositif HBSC. Ainsi, dans un accès UMA, on ne dispose pas d'une valeur de CGI à attribuer dans le champ réservé à cet effet dans l'interface A. Néanmoins, afin de ne pas laisser le champ CGI vide, le HBSC attribue généralement une valeur quelconque à ce champ, par exemple une valeur fixée par configuration initiale dans le HBSC. Jusqu'à présent, dans un accès UMA, cette valeur n'était pas utilisée dans la suite de la communication entre le terminal et le réseau principal. Dans le procédé selon un mode de réalisation de l'invention, on utilise ce champ réservé au CGI pour y insérer l'information à partir de laquelle on détermine le type d'accès utilisé par le terminal. Cette information correspond donc à une valeur attribuée dans le champ CGI. En d'autres termes, le procédé utilise, pour insérer l'information destinée à la détermination du type d'accès, un champ qui est utilisé pour une autre fonction dans l'accès GERAN, à savoir la fonction de localisation géographique du terminal, cette fonction n'étant pas mise en oeuvre quand on utilise un accès UMA.

Avantageusement, le procédé comprend une étape d'extraction de l'information insérée et une étape d'interrogation de moyens de stockage pour déterminer le type d'accès utilisé par le terminal au cours de la communication.

Ainsi, la détermination du type d'accès se fait de façon transparente au cours de la communication dans le réseau principal. On prévoit une extraction de l'information, cette extraction faisant avantageusement suite à une lecture des communications par une sonde réseau, la détermination du type d'accès étant ensuite effectuée en vérifiant, dans les moyens de stockage, si cette information extraite est, ou non, associée à un type d'accès prédéterminé. Par exemple, les moyens de stockage sont une table, dans laquelle on associe différentes valeurs possibles de l'information et différents types d'accès. Dans le cas où l'information correspond à la valeur attribuée au CGI, on prévoit par exemple d'associer dans les moyens de stockage une liste de valeurs possibles de CGI (CGI₁, CGI₂,...) et une liste de type d'accès (UMA, GERAN,...) ou de données représentatives d'un type d'accès (accès haut débit, accès bas débit).

Avantageusement, lorsque l'information n'est pas présente dans les moyens de stockage, on attribue un type d'accès prédéterminé à l'accès utilisé par le terminal au cours de la communication.

Dans ce cas, il n'est pas nécessaire de stocker toutes les valeurs possibles que peut prendre l'information destinée à déterminer le type d'accès, mais uniquement une partie de ces valeurs, ce qui est plus facile à gérer. En effet, on peut ne stocker que les valeurs de l'information correspondant à un type d'accès prédéterminé. Par exemple, on stocke uniquement les valeurs CGI₁, CGI₂,... associées à l'accès UMA, sans stocker les valeurs des CGI associées à l'accès GERAN. A la suite de l'interrogation, si la valeur CGIₙ n'est pas présente dans les moyens de stockage, on considère que l'accès utilisé par le terminal est un accès "GERAN". Grâce à ce mode de réalisation, le fournisseur de services peut par exemple stocker uniquement les CGI correspondant à des HBSC, sans avoir à se soucier du stockage des CGI, bien plus nombreux, associés aux BTS d'un réseau GERAN.

L'invention a également pour objet un dispositif de communication comportant des moyens de détermination d'un type d'accès à un réseau de communication, utilisé par un terminal de communication au cours d'une communication entre le terminal et le réseau.

On notera que ce dispositif peut comprendre plusieurs sous-dispositifs. Ce dispositif est appelé dispositif de détermination et se distingue, de préférence, du dispositif intermédiaire décrit plus haut. Des avantages de ce dispositif de détermination sont présentés plus haut.

Avantageusement, les moyens de détermination comportent des moyens d'extraction d'une information utilisable pour déterminer le type d'accès et des moyens d'interrogation de moyens de stockage pour vérifier la présence de l'information dans les moyens de stockage.

On notera que les moyens d'extraction et les moyens de stockage peuvent être prévus sur des sous-dispositifs différents. Avantageusement, les moyens d'extraction et les moyens de stockage sont agencés dans un serveur chargé de fournir des données à un dispositif de distribution de contenus. Ce serveur est par exemple un serveur de type PNA (Presence Network Agent), défini dans une norme relative au 3GPP, et pourrait être qualifié de PLNA (Presence and Location Network Agent), dispositif chargé notamment de collecter des données de présence et éventuellement de localisation, pour les fournir à un dispositif de distribution de contenus, appartenant à un fournisseur de services.

Avantageusement, le dispositif comporte des moyens d'attribution d'un type d'accès aptes à être mis en oeuvre lorsque l'information extraite n'est pas présente dans les moyens de stockage.

L'invention a par ailleurs pour objet un dispositif de distribution de contenu à un terminal de communication par l'intermédiaire d'un réseau de communication auquel le terminal peut accéder selon au moins un type d'accès, le dispositif de distribution comprenant des moyens de sélection d'un contenu à envoyer en fonction du type d'accès utilisé par le terminal.

L'invention a également pour objet un programme d'ordinateur comprenant des instructions de code qui, lorsque le programme est exécuté par un processeur, sont aptes à commander la détermination d'un type d'accès utilisé par un terminal de communication au cours d'une communication entre le terminal et un réseau de communication ; ainsi qu'un support d'enregistrement sur lequel est stocké le programme, et une mise à disposition du programme en vue de son téléchargement.

L'invention sera mieux comprise à la lecture de la description qui va suivre, donnée uniquement à titre d'exemple et faite en se référant aux dessins dans lesquels :
- la figure 1 est une vue schématique d'un système apte à mettre en oeuvre un procédé selon un mode de réalisation de l'invention ; et
- la figure 2 est un diagramme illustrant un exemple de procédé mis en oeuvre par le système de la figure 1.

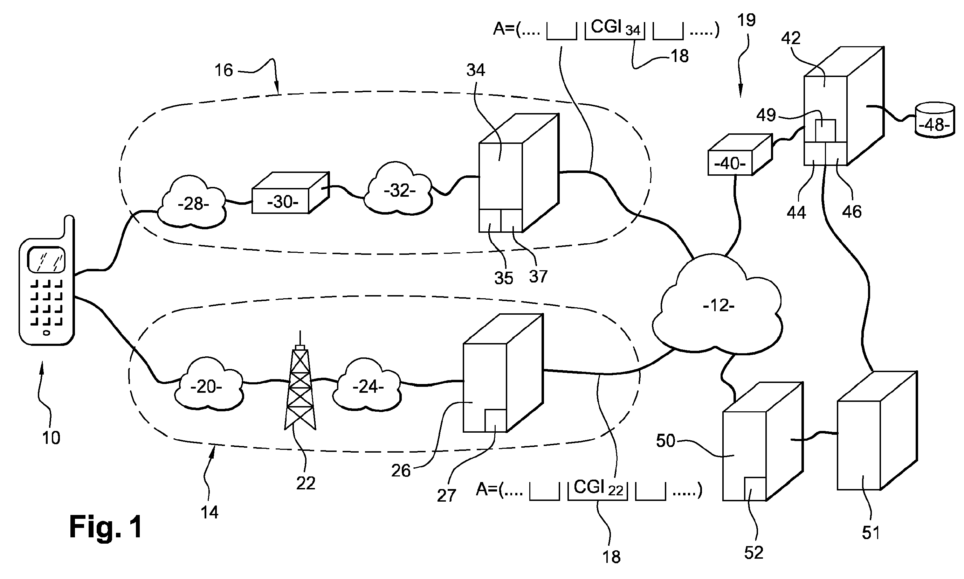

Comme on peut le voir sur la figure 1, le système de télécommunication comprend un terminal de télécommunication 10 pouvant communiquer avec un réseau de communication 12, appelé dans la suite réseau principal, par l'intermédiaire d'un premier réseau d'accès14, ou d'un second réseau d'accès16. Le système comporte en outre des moyens 19 de détermination d'un type d'accès utilisé par le terminal 10 au cours d'une communication avec le réseau 12. Le terminal 10 peut être un téléphone portable.

Dans cet exemple, le réseau principal 12 est le réseau utilisant le protocole GSM, plus précisément le réseau coeur GSM. Dans notre exemple, les communications au sein du réseau ont lieu grâce à une interface nommée "Interface A" normalisée au 3GPP (GSM série 8), cette interface véhiculant notamment un champ 18 réservé à des données de localisation géographique du terminal 10.

Le réseau d'accès 14 permet au terminal 10 d'accéder au réseau principal 12 selon un premier type d'accès, utilisant des ondes radio, à savoir un accès GERAN dans cet exemple. Ce réseau 14 comprend un réseau local 20, permettant au terminal 10 de communiquer avec une station BTS 22, ainsi qu'un réseau 24 permettant à la station BTS 22 de communiquer avec un dispositif intermédiaire 26. Ce dispositif intermédiaire est un contrôleur de station de base, ou BSC, 26. Le BSC 26 a notamment pour fonction de configurer des communications s'établissant entre le terminal 10 et le réseau principal 12. En particulier, le BSC 26 attribue aux communications l'interface A nécessaire à l'accès au réseau principal 12. On comprendra que le dispositif 26 est un dispositif intermédiaire entre le terminal 10 et le réseau principal 12. Le BSC 26 comporte en particulier des moyens 27 d'insertion ou de transmission d'une information, cette information étant par la suite utilisée pour déterminer le type d'accès utilisé par le terminal 10, comme cela est décrit dans la suite. Plus particulièrement, les moyens 27 sont aptes à insérer une information dans le champ 18 de l'interface A, ou sont aptes, selon un autre exemple, à transmettre cette information au réseau principal, cette information étant véhiculée par l'interface A. Dans le cas du réseau 14, l'information insérée ou transmise par les moyens 27 correspond à des données de localisation géographique du terminal 10, le CGI permettant de localiser le terminal 10. Plus précisément, ce CGI est la concaténation de deux informations, à savoir :
- la LAI (Location Area Identity), correspondant à une zone géographique large, regroupant plusieurs BTS similaires à la BTS 22, et
- une CI (Cell Identity) qui identifie une BTS à laquelle le terminal 10 est raccordé, correspondant à la station BTS la plus proche du terminal, à savoir, dans cet exemple, la station 22.

Dans la suite, on considère que l'information insérée ou transmise par les moyens 27 au cours d'une communication entre le terminal 10 et le réseau 12 est CGI₂₂, cette information étant fournie par le terminal 10 au cours de la communication.

Le réseau d'accès 16 comprend un premier réseau local 28, permettant au terminal 10 de communiquer avec une passerelle de communication 30. Dans cet exemple, le réseau 28 est un réseau WIFI et la passerelle 30 est similaire à celle commercialisée sous la marque LiveBox, installée par exemple au domicile de l'utilisateur du terminal 10. Le réseau d'accès 16 comprend par ailleurs un réseau ADSL 32, permettant à la passerelle 30 de communiquer avec un dispositif 34, à savoir un contrôleur particulier de station de base, ou HBSC 34, dans cet exemple. Ce dispositif 34 est un dispositif intermédiaire permettant au terminal 10 de communiquer avec le réseau 12. Dans le cas du réseau 16, les communications entre le terminal 10 et le réseau 12 ne sont pas transportées par ondes radio, mais par un tunnel UMA. Bien que différent du BSC 26, le HBSC 34 a une fonction semblable de configuration des communications entre le terminal 10 et le réseau principal 12, notamment en attribuant l'interface A aux communications. Le HBSC 34 comporte des moyens 35 d'insertion d'une information, qui pourra être par la suite utilisée pour déterminer le type d'accès utilisé par le terminal 10 pour communiquer avec le réseau 12, comme cela est décrit dans la suite. Les moyens 35 sont plus précisément aptes à insérer une information dans le champ 18 de l'interface A. Néanmoins, dans le cas du réseau 16, on ne dispose pas d'une station similaire à la station BTS 22 pour localiser le terminal 10. Ainsi, l'information que les moyens 35 peuvent insérer dans la communication entre le terminal 10 et le réseau 12 est une information constante, préalablement enregistrée dans le dispositif 34, dans des moyens de stockage 37. Dans cet exemple, on considère que l'information stockée dans les moyens 37, apte à être insérée dans le champ 18 de l'interface A au cours d'une communication, est CGI₃₄.

Les dispositifs intermédiaires 26, 34 sont reliés au réseau 12, plus précisément à une hiérarchie supérieure du réseau 12 telle qu'un dispositif de routage MSC (Mobile Switching Center), qui peut être différent pour chacun des dispositifs 26, 34.

Le système de la figure 1 comporte en outre des moyens 40 de lecture des communications ayant lieu dans le réseau principal 12, par exemple une ou plusieurs sondes passives 40 connectées au réseau principal 12. Plus précisément les moyens 40 sont connectés entre le dispositif 26 ou 34 et le MSC correspondant. Ces moyens 40 sont capables de lire les communications munies de l'interface A, à savoir les communications établies entre différents dispositifs intermédiaires tels que les dispositifs 26 ou 34 et le ou les MSC correspondants. Ces moyens 40 comprennent en outre des moyens d'envoi des données lues aux moyens 19 de détermination de type d'accès. Dans l'exemple de la figure 1, les dispositifs 26 et 34 sont connectés à un même MSC du réseau 12, et la sonde 40 est connectée entre les dispositif 26, 34 et ce MSC.

Les moyens 19 de détermination de type d'accès comprennent un dispositif de communication 42 et des moyens de stockage 48, inclus dans le dispositif 42 ou raccordés à ce dernier. La connexion entre les moyens de lecture 40 et le dispositif 42 se fait, selon l'exemple décrit, par une connexion TCP/IP. Le dispositif 42 comporte des moyens 44 d'extraction, à partir des données envoyées par les moyens de lecture 40, d'une information utilisable pour déterminer le type d'accès, et des moyens 46 d'interrogation des moyens de stockage 48. Dans cet exemple, les moyens de stockage 48 sont une table listant différentes valeurs de CGI, notamment la valeur CGI₃₄, en tant que valeurs associées à un type d'accès particulier, à savoir l'accès UMA. Le dispositif 42 comporte en outre des moyens 49 d'attribution d'un type d'accès, activables à la suite de l'interrogation des moyens 48, notamment lorsque l'information extraite par les moyens 44 n'est pas présente dans les moyens de stockage 48. Dans cet exemple, le dispositif 42 est un serveur de type PLNA, chargé notamment de collecter des données de présence et de localisation à partir de l'interface A au cours de communications, afin de créer des évènements de présence en temps réel, parmi lesquels l'information du type d'accès utilisé est présente. Le dispositif 42 peut transmettre éventuellement ces données à un serveur de présence 51, qui met à disposition de différents fournisseurs de services, ayant souscrit des abonnements, des informations liées à la présence d'un utilisateur sur le réseau principal 12. Le serveur 51 est par exemple raccordé à un dispositif 50 de distribution de contenus, capable d'envoyer au terminal 10 des contenus, notamment afin de fournir des services particuliers.

Les moyens 44, 46, 49 du dispositif 42 peuvent être inclus dans un programme d'ordinateur comprenant des instructions aptes à commander la détermination du type d'accès au réseau utilisé par le terminal 10. Ce programme peut être stocké sur un support d'enregistrement ou être mis à disposition en vue de son téléchagrement.

On notera que l'on prévoit dans cet exemple une sonde passive 40 et un dispositif PLNA 42 par MSC du réseau principal GSM 12.

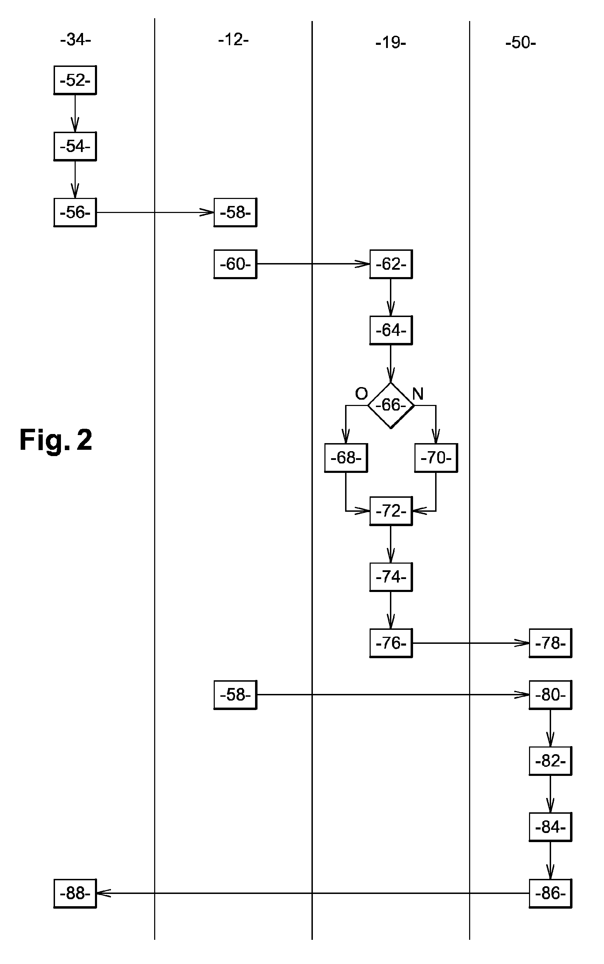

Un procédé de communication mis en oeuvre par le système de la figure 1 va à présent être décrit, en se référant à la figure 2.

La communication entre le terminal 10 et le réseau 12 peut se faire potentiellement par deux types d'accès, à savoir l'accès GERAN, utilisant le réseau d'accès 14, et l'accès UMA, utilisant le réseau d'accès 16. Par exemple, lorsque l'utilisateur se déplace dans la rue, il utilise le réseau GERAN 14, et lorsqu'il rentre chez lui, il utilise, automatiquement ou non, le réseau UMA 16.

Au cours d'une communication, des messages sont échangés entre le terminal 10 et le réseau 12. Quel que soit le réseau d'accès 14 ou 16 utilisé, les messages échangés entre les dispositifs intermédiaires 26, 34 et le réseau 12 sont par exemple des messages de localisation ("Location Updating", "TMSI Reallocation"), ou encore des messages concernant des modifications dans la communication ("Handover"), tel qu'un changement de station BTS. On notera que, dans tous ces messages, l'interface A du protocole GSM véhicule le champ 18.

La communication entre le terminal 10 et le réseau 12 par l'intermédiaire du réseau d'accès UMA 16 comprend une communication entre le terminal 10 et le dispositif intermédiaire 34, puis entre ce dispositif 34 et le réseau 12. Ainsi, le procédé de communication comporte une étape 52 de réception, par le dispositif 34, de la communication émise par le terminal 10. Cette étape 52 est suivie d'une étape 54 de configuration de la communication, par le terminal 34, afin de transmettre cette communication au réseau 12. Cette étape 54 de configuration comporte notamment une étape d'insertion d'une information dans le champ 18 de l'interface A. Plus précisément, le dispositif 34 insère, grâce aux moyens 35, l'information "CGI₃₄", cette information ayant été préalablement paramétrée dans le dispositif 34, et stockée dans les moyens 37. Dans cet exemple, l'information CGI₃₄ est spécifique au dispositif 34, qui insérera cette même information dans toute communication à configurer.

L'étape de configuration 54 est suivie d'une étape 56 de transmission de la communication au réseau principal 12. Cette étape est suivie d'une étape 58 de traitement de la communication par le réseau 12. Ce traitement 58 peut prendre une multiplicité de formes, par exemple une étape d'envoi, par le distributeur de contenus 50, d'un contenu destiné à un service particulier rendu à l'utilisateur du terminal 10, par exemple l'envoi d'un fichier vidéo, comme cela est décrit dans la suite.

En parallèle de cette étape de traitement 58, le procédé de communication comporte une étape 60 de lecture de messages échangés sur le réseau 12, par exemple de lecture des messages reçus par le MSC, notamment ceux issus des dispositifs 26, 34, cette étape étant mise en oeuvre par la sonde passive 40 raccordée au MSC, cette sonde 40 envoyant ensuite les informations lue au PLNA 19. On passe ensuite à une étape 62 d'extraction, par les moyens 44, de l'information insérée dans le champ 18 de l'interface A dans les messages lus. Dans l'exemple d'une communication par l'accès UMA, l'information extraite correspond à l'information "CGI₃₄". L'étape 62 est suivie d'une étape 64 d'interrogation des moyens 48, suivie d'une étape de test 66 sur la présence, ou non, de l'information extraite, en l'occurrence CGI₃₄, dans les moyens de stockage 48.

Si le résultat du test 66 est positif, c'est-à-dire si l'information CGI₃₄ est stockée dans les moyens 48, on passe à une étape 68 au cours de laquelle les moyens d'attribution 49 attribuent le type d'accès "UMA" à la communication établie entre le terminal 10 et le réseau 12.

Si le résultat du test 66 est négatif, c'est-à-dire si l'information CGI₃₄ n'est pas stockée dans les moyens 48, on passe à une étape 70 au cours de laquelle les moyens 49 attribuent le type d'accès "GERAN" à la communication.

Les étapes 68 ou 70 sont suivies d'une étape 72 de mise à disposition du type d'accès attribué à la communication. L'étape 72 est suivie, dans cet exemple, d'une étape 74 d'envoi de données de présence au serveur de présence 51. Ce dernier peut analyser le type d'accès déterminé par le PLNA 19 et, dans le cas où l'accès attribué à la communication entre le terminal 10 et le réseau 12 a été modifié, peut exécuter une étape 76 de notification du dispositif 50 de distribution du contenu, ce dispositif 50 ayant souscrit préalablement à un service d'information de présence des utilisateurs du réseau 12, plus précisément des utilisateurs auxquels le dispositif 50 est susceptible d'envoyer des contenus. On comprendra que les étapes 62 à 78 sont des étapes de détermination, à partir de l'information insérée au cours de l'étape 54, du type d'accès.

Dans la suite, on revient à l'étape 58 du traitement de la communication par le réseau 12. Dans le cas où cette étape 58 fait intervenir le dispositif 50, par exemple du fait qu'une requête de réception de contenu a été émise par le terminal 10 auprès du dispositif 50, on passe à une étape 80 de réception de la requête par le dispositif 50. Cette étape 80 est suivie d'une étape 82 d'exécution de la requête, en tenant compte des informations de présence notifiées préalablement au dispositif 50, par exemple lors de l'étape 78. L'étape 82 est suivie d'une étape 84 de sélection de contenu à envoyer au terminal 10, cette sélection tenant compte de l'accès utilisé par le terminal 10. Dans l'exemple de la figure 2, le terminal accède au réseau 12 par le réseau UMA 16, si bien que le débit de communication est relativement élevé. En conséquence, l'étape de sélection 84 est suivie d'une étape 86 d'envoi d'un contenu de taille relativement importante au terminal 10, par exemple une vidéo à haut débit, par l'intermédiaire du réseau 12 et par l'intermédiaire du réseau UMA 16. Cette étape 86 est suivie d'une étape 88 de réception du contenu par le terminal 10.

On comprendra que, dans le cas où la communication entre le terminal 10 et le réseau 12 se fait par l'intermédiaire du réseau d'accès GERAN 14, le procédé de communication est similaire. Néanmoins, l'étape 54 d'insertion de l'information est mise en oeuvre par les moyens d'insertion 27, ou peut être mise en oeuvre à une autre étape de la communication au sein du réseau d'accès 14, l'étape 54 étant alors remplacée par une étape de transmission de l'information par le dispositif 26. En outre, à la suite de l'étape de test 66 sur la présence ou non de l'information CGI₂₂ dans les moyens de stockage 48, les moyens 49 attribuent le type d'accès "GERAN" à la communication. Par la suite, l'étape 84 de sélection de contenu tiendra compte du fait que l'accès GERAN a un débit plus faible que l'accès UMA, si bien que l'on choisira un contenu de taille plus faible que celui envoyé à l'étape 86 de la figure 2. Par exemple, la vidéo envoyée sera de moins bonne résolution.

L'invention n'est pas limitée aux modes de réalisation précédemment décrits.

Selon une variante, les moyens de stockage 48 ne stockent pas uniquement les valeurs des CGI correspondant à un accès UMA, mais également celles des CGI associés à d'autres types d'accès possibles. Dans ce cas, l'accès attribué au cours des étapes 68, 70 correspond à l'accès associé au CGI extrait lors de l'étape 62.

On notera que les réseaux d'accès 14, 16 utilisent des ondes de type différent sur au moins une partie de la communication entre le terminal 10 et les dispositifs intermédiaires 26, 34, mais pas forcément tout au long de cette communication.

Parmi les avantages de l'invention, on notera que l'on utilise, pour déterminer le type d'accès utilisé par le terminal, un champ 18 qui est destiné initialement à une autre fonction que la détermination d'un type d'accès. En effet, dans le cas d'un accès de type GERAN, l'information CGI₂₂ véhiculée par la communication dans l'interface A permet d'identifier la station BTS 22 à laquelle est raccordé le terminal 10 au cours de la communication. Cette information peut être ensuite utilisée au sein du réseau 12 par exemple pour la localisation géographique du terminal 10.

On notera par ailleurs que l'information sur le type d'accès utilisé par le terminal 10 au cours de la communication avec le réseau 12 est disponible en temps réel, et ceci sans aucune perturbation du réseau principal 12, en particulier sans encombrement de ce réseau et sans modification de l'interface standard A, puisque l'on utilise un champ déjà prévu pour la localisation géographique du terminal 10.

On notera également que l'on propose, grâce au procédé décrit, de bénéficier des avantages de la standardisation, tout en améliorant les spécificités liées à chaque communication établie entre un terminal et un réseau. En effet, grâce à l'information permettant de déterminer le type d'accès, le terminal peut communiquer avec le réseau principal en utilisant une interface standardisée, en particulier l'interface A, tout en disposant d'une information relative à la spécificité de la communication ayant lieu avec le terminal, à savoir le type d'accès utilisé par le terminal pour accéder au réseau.

En outre, on comprendra que les moyens 19 de détermination du type d'accès, comprenant dans cet exemple le dispositif 42, les moyens de stockage 48 voire le serveur de présence 51, peuvent se présenter sous diverses configurations, destinées à mettre à la disposition de différents fournisseurs de services les informations relatives au type d'accès emprunté, en temps réel, entre des terminaux de communication et le réseau principal 12.

Parmi les autres avantages de l'invention, on notera que le procédé décrit ci-dessus permet à des fournisseurs de services d'adapter le contenu qu'ils souhaitent envoyer au terminal 10 en fonction du type d'accès emprunté, notamment en fonction du débit de cet accès, tout en utilisant un protocole standard de communication, et cela de façon transparente pour l'utilisateur, de façon automatique, sans que l'utilisateur ait à saisir d'informations.

On comprendra que la façon d'exploiter l'information fournie par le type d'accès utilisé par le terminal peut prendre différentes formes. Dans la figure 2, on sélectionne un contenu au cours de l'étape 84. Néanmoins, on pourrait envisager de déclencher le téléchargement de fichiers uniquement lorsque le terminal 10 utilise un accès prédéfini.

## Revendications

1. Procédé de communication entre un terminal (10) et un réseau de communication, le terminal étant apte à accéder au réseau selon au moins un type d'accès (14, 16), par l'intermédiaire d'un dispositif intermédiaire (26, 34), **caractérisé en ce que** le procédé comprend une étape (54) d'insertion d'une information (CGI₂₂, CGI₃₄) par le dispositif (26, 34) dans une communication entre le terminal et le réseau, et une étape de détermination (62-78), à partir de cette information, du type d'accès utilisé par le terminal.

2. Procédé selon la revendication précédente, comprenant en outre une étape (84) de sélection d'un contenu à envoyer au terminal en fonction du type d'accès déterminé.

3. Procédé selon l'une quelconque des revendications précédentes, comprenant une étape (62) d'extraction de l'information insérée (CGI₂₂, CGI₃₄) et une étape (64) d'interrogation de moyens de stockage (48) pour déterminer le type d'accès utilisé par le terminal au cours de la communication.

4. Procédé selon la revendication précédente, au cours de laquelle, lorsque l'information n'est pas présente dans les moyens de stockage, on attribue (70) un type d'accès prédéterminé à l'accès utilisé par le terminal au cours de la communication.

5. Dispositif de communication comportant des moyens (19) de détermination d'un type d'accès (14, 16) à un réseau de communication (12) utilisé par un terminal de communication (10) au cours d'une communication entre le terminal et le réseau.

6. Dispositif de distribution de contenu à un terminal de communication (10) par l'intermédiaire d'un réseau de communication (12) auquel le terminal peut accéder selon au moins un type d'accès (14, 16), le dispositif de distribution comprenant des moyens (52) de sélection d'un contenu à envoyer en fonction du type d'accès utilisé par le terminal.

7. Programme d'ordinateur comprenant des instructions de code qui, lorsque le programme est exécuté par un processeur, sont aptes à commander la détermination d'un type d'accès (14, 16) à un réseau de communication (12) utilisé par un terminal de communication (10) au cours d'une communication entre le terminal et le réseau (12).

8. Support d'enregistrement sur lequel est stocké le programme selon la revendication précédente.

9. Mise à disposition du programme selon la revendication 7 en vue de son téléchargement.
